# EUROPEAN PATENT APPLICATION

(11) **EP 1 211 491 A2**
(43) Date of publication of application: **05.06.2002**
(21) Application number: 01125675.7
(22) Date of filing: 26.10.2001
(51) Int. Cl.: G01F 23/36, H01H 35/18

(54) **Liquid level sensor with alarm switch**

(30) Priority: 14.11.2000 IT TO001062
(71) Applicant: BITRON S.p.A., 10042 Nichelino (Torino) (IT)
(72) Inventor: Brignone, Enzo, 12025 Fraz. Monastero Dronero (Cuneo) (IT)
(74) Representative: Gerbino, Angelo

(57) **Abstract**

A device for sensing when a liquid has reached a predetermined level in a chamber (10) includes: a member (12) able to float on the liquid and having an extension (22) pivoted to a wall of the chamber (10) in such a way that, under the raising/lowering action of the liquid, the member (12) travels through an arc of a circle about a pivot axis (24); a switch operable by the float member; and a cavity (26) associated with the float member (12) and able to house an element which is movable between a position distant from the pivot axis (24) and a position close to the said axis (24) as a result of the raising/lowering action of the liquid on the member (12).

## Description

The present invention relates to a level sensor, such as a device for monitoring whether a liquid has reached a predetermined level in a chamber.

The object of the present invention is to provide a device of the type described above which is able to indicate with a high degree of accuracy that such a level has been reached.

This object is achieved according to the invention by providing a device which includes:
- a member able to float on the said liquid and having a portion pivoted onto a wall of the said chamber, in such a way that the raising/lowering action which the liquid exerts on the member causes it to move through an arc of a circle around the pivot axis,
- a switch activated by the float member, and
- a cavity associated with the said float member and able to house an element movable between a position distant from the pivot axis and a position close to the said axis under the raising/lowering action of the liquid on the member.

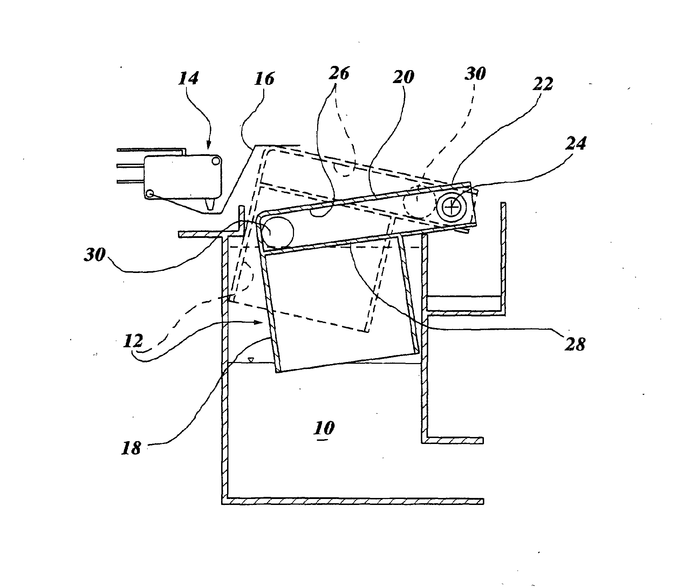

Advantages and characteristics of the present invention will become apparent from the detailed description which follows, provided purely by way of non-limitative example with reference to the appended drawing, in which the only illustration is a schematic front elevation of the device of the invention.

A chamber 10 in a domestic appliance, such as a washing machine or a dishwasher, houses a device for indicating that a liquid - in particular water - has reached a predetermined level within it. The device includes a member 12 able to float on the liquid, and a switch, advantageously a microswitch 14, with an operating lever 16 operable by contact with the float member 12.

This latter includes a lower portion 18, which is substantially parallelepipedal, and an upper portion 20 which includes an extension 22 pivoted to a wall of the chamber 10 about a substantially horizontal axis 24.

A cavity 26 is formed in the upper portion 20, with the pivot axis 24 located at one end thereof. The cavity 26 has a substantially rectangular base surface 28 which provides a rectilinear path for an element, advantageously constituted by a sphere 30 of a material with a high specific weight.

When the level of water in the chamber 10 is low, the float member 12 is in the configuration shown in solid outline in the drawing: that is inclined downwards with the sphere 30 inside the cavity 26 in a position distant from the pivot axis 24 as a result of the downwards inclination of the path 28.

As the level of the liquid rises, it reaches the lower portion 18 of the float member 12 and begins to exert a hydrostatic thrust on it. The pivotal connection of the float member 12 obliges it to travel in an arc about the axis 24, thereby gradually reducing the inclination to the horizontal of the base surface 28 of the cavity 26, until it is horizontal, and then causing it to become inclined in the opposite direction.

As a result, as soon as the base surface 28 is inclined in the opposite direction, the sphere 30 rolls into a position close to the axis 24 (shown in the drawing by a broken line). The effective lever arm of the sphere 30 on the axis 24 is thereby significantly reduced, along with the relative moment which opposes that generated by the hydrostatic thrust of the water on the float member 12. This latter is thus rapidly raised, completing the upper portion of its path very quickly, acting on the operating lever 16 of the microswitch 14 to alter the operating state thereof (shown in the drawing in broken outline).

This change in the state of the microswitch 14 supplies electrical circuits (not illustrated) with the information that the liquid has reached the level causing the sphere 30 to change position. This information can be used either to relay an external signal, an alarm for example, and/or directly to control the operation of a device - an overflow pump in the chamber 10 for example - provided to stop the rise of the level of the liquid.

A subsequent fall in this level, on the other hand, causes the floating member 12 to drop, allowing the microswitch 14 to resume its original state thereby causing the alarm signal and/or the overflow pump to stop.

The change in state of the microswitch 14 occurs virtually at the same time as the liquid reaches the level causing the sphere 30 to move position. The device of the invention thus ensures precision timing of action triggered on this level being reached.

Naturally, the principle of the invention remaining unchanged, manufacturing details and embodiments may vary widely from those described purely by way of non-limitative example, without departing thereby from the scope of the invention. In particular, application of the device of the invention is not limited to the field of domestic appliances, but could be used in the chamber of any apparatus in which it is necessary to monitor when a liquid contained therein has reached a particular level.

## Claims

1. A device for monitoring when a liquid has reached a predetermined level in a chamber (10), said device including:
- a member (12) for floating on the liquid and having an extension (22) pivoted onto a wall of the said chamber (10) in such a way that under the raising/lowering action of the liquid, the member (12) travels in an arc of a circle about a pivot axis (24),
- a switch operable by the float member, and
- a cavity (26) associated with the floating member (12) for housing an element movable between a position distant from the pivot axis (24) and a position close to the said axis (24) as a result of the raising/lowering action of the liquid on the member (12).

2. A device according to Claim 1, in which the float member (12) includes a lower portion (18), which is substantially parallelepipedal, and an upper portion (20), a projecting end of which constitutes the extension (22) and in which the cavity (26) is formed.

3. A device according to either of the preceding Claims, in which the pivot axis (24) is at one end of the said cavity (26).

4. A device according to any of the preceding Claims, in which the said cavity (26) has a base surface (28) on which the movable element can travel from one position to the other, as a result of a change in the direction of inclination of this base surface (28) to the horizontal.

5. A device according to any preceding Claim, in which the said movable element is a sphere (30) of a material with a high specific weight.

6. A device according to any preceding Claim, in which the said switch is a microswitch (14).
